# EUROPÄISCHE PATENTSCHRIFT

(11) **EP 1 973 634 B1**
(45) Veröffentlichungstag und Bekanntmachung des Hinweises auf die Patenterteilung: **14.05.2014**
(21) Anmeldenummer: 07711118.5
(22) Anmeldetag: 05.01.2007
(51) Int. Cl.: B01D 63/06, B01D 53/22, H01M 8/02

(54) **KOPFPLATTE**
TOP PLATE
PLAQUE DE RECOUVREMENT

(30) Priorität: 05.01.2006 DE 102006000984
(43) Veröffentlichungstag der Anmeldung: 01.10.2008
(73) Patentinhaber: Whitefox Technologies Limited, London SW1A 2DD (GB)
(72) Erfinder: HEGGEMANN, Robert, 33098 Paderborn (DE); SIEKAUP, Rolf, 33100 Paderborn (DE)
(74) Vertreter: Potter Clarkson LLP
(86) Internationale Anmeldenummer: PCT/DE2007/000020
(87) Internationale Veröffentlichungsnummer: WO 2007/076855

(56) Entgegenhaltungen:
- US-A- 4 961 760
- US-A- 5 318 095
- US-B1- 6 547 286

## Beschreibung

Die Erfindung betrifft eine Kopfplatte, die ein Rohrbündel mit einer Vielzahl von insbesondere porösen, eine Membran aufweisenden Rohren endseitig fasst und dichtend abschließt.

Rohre der genannten Art, beispielsweise Röhrchen, Kapillaren oder dergleichen aus einem Kunststoff, einem Kunststoffverbund, gegebenenfalls auch mit einem schichtweisen Aufbau, aus einer Keramik oder einem Metall finden vielfältig Verwendung.

Beispielsweise erfolgt bei Brennstoffzellen in solchen Rohren eines Rohrbündels der Transport einer Brennstoffkomponente, weshalb ein solches als Mikroreaktor ausgelegtes Röhrchen regelmäßig auch mit einer Membran versehen ist, durch die die miteinander reagierenden Brennstoffkomponenten getrennt sind.

Ein anderes Verwendungsgebiet derartiger Rohrbündel ist die Raffinierung von Treibstoffen aus biologisch nachwachsenden Materialien, beispielsweise aus Bioethanol. Durchströmt Bioethanol ein eine semipermeable Membran ausbildendes Rohr, wird durch die Membran das in dem Bioethanol vorhandene Wasser abgezogen.

Bei solchen Rohrbündeln besteht grundsätzlich das Problem, diese endseitig zu fassen und abzuschließen. Das sogenannte Potting, das Einfassen der Enden dieser Rohrbündel untereinander als insbesondere auch für einen dichtenden Abschluss gegen ein Gehäuse, einer Rohrleitung oder dergleichen, erfolgt regelmäßig in Kunstharz-Gießtechniken, bspw. Epoxy-Harzen, die jedoch nicht unproblematisch sind. So führen unterschiedliche Wärmeausdehnungskoeffizienten bei einer Arbeitstemperatur von bis zu 150°C bei Niedertemperaturbrennstoffzellen bzw. bis 250°C bei Mitteltemperaturbrennstoffzellen zu erheblichen thermischen Belastungen, die zu Brüchen, Undichtigkeit und dergleichen mehr im Bereich der Kopfplatte führen, können, was regelmäßig ein Versagen der gesamten Vorrichtung zur Folge hat.

Vor diesem technischen Hintergrund macht die Erfindung es sich zur Aufgabe, eine Kopfplatte zur Verfügung zu stellen, die mechanisch hoch belastbar, sicher die Einzelrohe des Rohrbündels fassend und dichtend haltend ausgebildet werden kann.

Überraschenderweise hat es sich gezeigt, dass diese technische Problematik durch eine Kopfplatte gemäß des Anspruchs 1 gelöst ist, bei der darauf abgestellt ist, dass die Kopfplatte aus einem Metall oder einer metallischen Legierung geringerer Schmelztemperatur als die Versagenstemperatur eines Rohrmaterials und/oder der Membran besteht, wobei die Schmelztemperatur zwischen 100°C und 250°C liegt.

Niedrig schmelzende Metalle, Lote oder metallische Legierungen sind üblicherweise äußerst spröde und nach Erstarrung ihrer Schmelze grobkörnig. Damit geht regelmäßig eine große mechanische Instabilität einher. Von daher sind derartige Materialien regelmäßig ungeeignet, die einzelnen Rohre insbesondere kleiner Durchmesser eines Rohrbündels endseitig zu fassen und dichtend abzuschließen.

Dennoch können durch die Erfindung Metalle und/oder metallische Legierungen geringer Schmelztemperatur zur Verfügung gestellt werden, die solches vermögen. Dies insbesondere auch im Hinblick auf durchaus unterschiedliche Durchmesser eines Rohres des Rohrbündels, welche Durchmesser sich regelmäßig von weniger als 1 mm bishin in den Zentimeterbereich bewegen können.

Beachtlich bei der Wahl des Metalls oder der metallischen Legierung ist deren Schmelztemperatur, die naturgemäß geringer sein muß als die Versagungstemperatur eines Rohrmaterials bzw. die einer Membran, andererseits aber höher als die Betriebstemperatur einer fertigen Vorrichtung. Solches kann regelmäßig dann erreicht werden, wenn die Schmelztemperatur zwischen 100°C, insbesondere 120°C, und 250°C liegt.

Vorzugsweise findet als Metall Bismut, auch als Wismut bezeichnet, chemisches Symbol Bi, Verwendung oder weist die Legierung Bismut auf.

Bismut ist ein rötlichweißes, glänzendes und mäßig hartes Schwermetall. Ähnlich wie Wasser zeigt Bismut beim Schmelzen eine Volumenkontraktion und dehnt sich beim Erstarren um 3,32% aus. Infolge dessen dringen bei einem Abkühlen Bismut und Bismut enthaltende Schmelzen hervorragend auch in kleinste Zwischenräume zwischen den Rohren eines Rohrbündels ein. Darüber hinaus ist Bismut chemisch sehr beständig. So ist es beispielsweise in nicht oxidieren Säuren unlöslich.

Allerdings liegt der Schmelzpunkt reinen Bismuts bei 271,3°C und damit für viele Anwendungen zu hoch. Bevorzugt wird deshalb die Verwendung einer Wismutlegierung, deren Schmelzpunkt deutlich abgesenkt sein kann, wenn eine derartige Legierung ca. 14% bis 60% Wismut, 20% bis 30% Blei oder bis zu 45% Zinn oder auch Antimon, Kadmium, Indium, Zink, Tellur, Quecksilber oder Thallium enthält.

Insbesondere bei den eingangs näher erläuterten Verwendungszwecken wird jedoch bevorzugt, dass die Legierung oder das Metall bleifrei ist.

Eine bevorzugte Legierung ist eine eutektische Wismut-Zinn Legierung, deren Schmelzpunkt bei 138°C liegt und die eine Dichte von 8,58 g/cm³ aufweist.

In vorteilhafter Weise sind die Metalle einer eutektischen Legierung im flüssigen Zustand vollständig mischbar und erstarrt eine Schmelze wie ein reiner Stoff bei einer einheitlichen Temperatur. Bei der Erstarrung entmischen sich die Komponenten und kristallieren nebeneinander in feinstkristalliner Form aus, dem eutektischen Gefüge. Weiter von Vorteil ist, dass ein Eutektikum den niedrigsten in dem betrachteten Stoffsystem möglichen, als eutektische Temperatur oder eutektischer Punkt im zugehörigen Schmelzdiagramm bezeichneten Erstarrungs- oder Schmelzpunkt aufweist.

Ein Rohrmaterial wird regelmäßig ein Kunststoff sein, insbesondere ein Polymer, wobei insbesondere daran gedacht ist, dass auch eine Membran eine Polymermembran ist. Die Versagenstemperatur, bei der eine Funktionsfähigkeit des Rohres bzw. der Membran nicht mehr gegeben ist, liegt vielfach wenig unter 200°C, so dass ein solches Polymer-Rohr bzw. eine solche Polymermembran durch die Metallschmelze bzw. die Schmelze der Legierung sicher nicht beschädigt wird.

Alternativ kann ein insbesondre poröses Rohr aus einer Keramik und/oder einem Metall, insbesondere einem Metallsinter sein. Solche Rohre sind bestens geeignet, mit einer Schicht aus Zeolithen versehen zu werden, die eine Membran ausbildet. Auf Grund ihrer kristallinen Porenstruktur eignen sich derartige Membranschichten zur größen- und formselektiven Trennung flüssiger und gasförmiger Stoffgemische. Darüber hinaus lässt sich durch die Wahl des Si/Al-Verhältnisses im Zelolithkristall der hydrophile/hydrophobe Charakter einstellen. Damit kann eine hydrophobe Zelolithmembran für eine selektive Abtrennung organischer Lösungsmittel, wie Ethanol von Wasser, mit der Hilfe der Pervaporation bei ca. 100°C zur Verfügung gestellt werden.

Insbesondere bei Rohren geringen Durchmessers können diese chaotisch und sich berührend gebündelt sein, bspw. bei der Raffinade von Bioethanol. Dennoch kommt es durch die besonderen Eigenschaften insbesondere des Bismuts zu einem sicheren, abdichtenden Fassens der Rohre. Jedoch sollte sicherheitshalber die axiale Länge eines Vergusses länger bemessen sein als der Durchmesser einer Hüllkurve des Rohrbündels. Über die axiale Länge wird dann sicher überall ein abgedichtetes Fassen der einzelnen Rohre erfolgen.

Natürlich können die Rohre des Rohrbündels alternativ auch an einem vorgebbaren Raster beabstandet ausgerichtet sein, wie dies beispielsweise bei Brennstoffzellen üblich ist.

Die Erfindung wird anhand der Zeichnung näher erläutert, in der lediglich schematisch Ausführungsbeispiele dargestellt sind. In der Zeichnung zeigt:
- Fig. 1:: in einer seitlichen Ansicht einen Verguss der Rohrenden von Rohren eines Rohrbündels und
- Fig. 2:: einen vergrößerten Auschnitt entlang der Linie II, II in Figur 1.

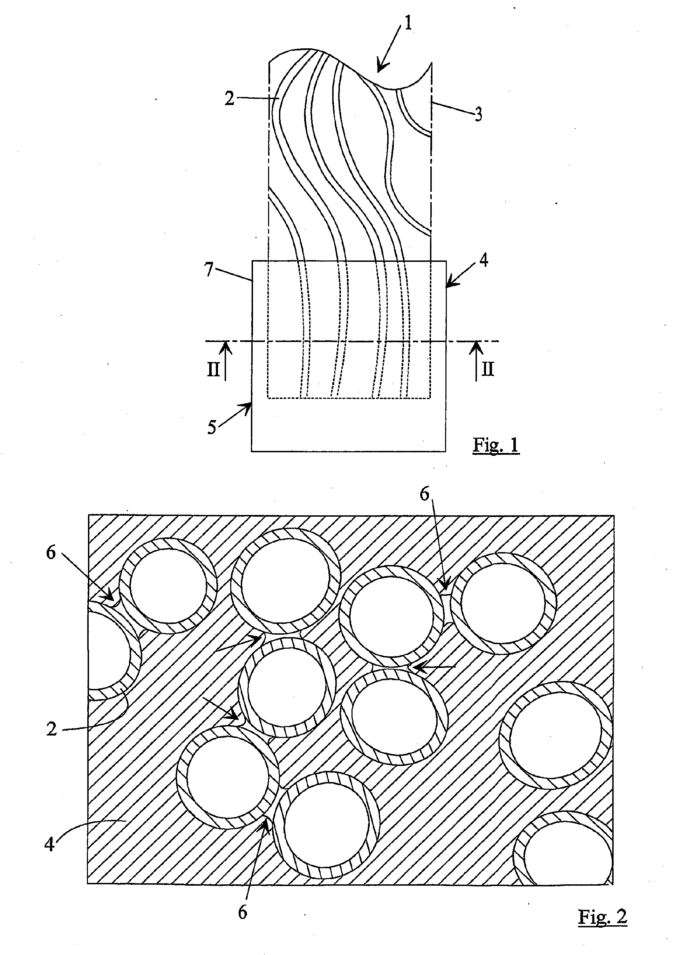

Figur 1 zeigt in einer seitlichen Darstellung ein Rohrbündel 1 mit einer Vielzahl von Rohren 2, beispielsweise Polymermembranen eines äußeren Durchmessers von etwa 0,5 mm. Die Rohre 2 sind chaotisch gebündelt und berühren sich. Die Außenkontur des Rohrbündels 1 ist deshalb lediglich durch eine strichpunktierte Hüllkurve 3 angedeutet. Dennoch ist es möglich, eine metallische Kopfplatte 4 auszubilden, die sicher und abdichtend, vergleiche auch Figur 2, die einzelnen Rohre 2 endseitig untereinander und bspw. gegen ein Gehäuse einfasst.

Hierzu wird ein Metall oder eine metallische Legierung der eingangs erläuterten Art in einer geeigneten, topfförmigen Form verflüssigt und wird das Rohrbündel 1 einerends in die Schmelze eingetaucht. Hierbei können in an sich bekannter Weise die Rohre 2 endseitig verschlossen sein. Dies ist bei geringen Innendurchmessern der Rohre 2 allerdings regelmäßig nicht nötig, da das flüssige Metall bzw. die flüssige Legierung in eine Rohr 2 nur in einem geringen Maß axial eindringt.

Um sicherzustellen, dass sämtliche Zwischenräume über die axiale Länge der Kopfplatte 4 auch geschlossen werden, ist regelmäßig die axiale Erstreckung eines Vergusses 5 größer bemessen als sein Durchmesser bzw. der der Hüllkurve 3.

Die Fertigstellung der Kopfplatte 4 erfolgt durch einen Schnitt, beispielsweise entlang der Linie II, II, durch den dann die Rohrenden freigelegt werden.

Figur 2 zeigt einen nachgezeichneten Anschliff eines derartigen Schnittes in vergrößerter Darstellung. Größere Zwischenräume zwischen den einzelnen Rohren 2 werden von einem Metall oder einer metallischen Legierung nach der Erfindung feinstporig und in dieser Größendarstellung homogen geschlossen. Sind Rohre 2 extrem nahe, sich gegebenenfalls auch berührend, verbleibt ein geringer Hohlraum, vergleiche die Pfeile 6. Diese Hohlräume werden jedoch durch die axiale Länge des Vergusses 5 bzw. der Kopfplatte 4 sicher über die axiale Erstreckung geschlossen.

Nach entsprechender Bearbeitung der radialen Mantelfläche 7 der Kopfplatte 4 ist dann das Rohrbündel 1 einerends für eine weitere Verwendung abdichtend gefasst und gehalten.

## Patentansprüche

1. Kopfplatte, ein Rohrbündel mit einer Vielzahl von insbesondere porösen, eine Membran aufweisenden Rohren endseitig fassend und dichtend abschließend, **dadurch gekennzeichnet, dass** die Kopfplatte (4) aus einem Metall oder einer metallischen Legierung geringerer Schmelztemperatur als die niedrigste Versagenstemperatur eines Rohrmaterials und/oder der Membran besteht, wobei die Schmelztemperatur zwischen 100°C und 250°C liegt.

2. Kopfplatte nach einem oder mehreren der vorangehenden Ansprüche, **dadurch gekennzeichnet, dass** das Metall Bismut (Wismut; Bi) ist oder die Legierung Bismut aufweist.

3. Kopfplatte nach einem oder mehreren der vorangehenden Ansprüche, **dadurch gekennzeichnet, dass** die Legierung eine wismutlegierung ist.

4. Kopfplatte nach einem oder mehreren der vorangehenden Ansprüche, **dadurch gekennzeichnet, dass** das Metall oder die Legierung bleifrei ist.

5. Kopfplatte nach einem oder mehreren der vorangehenden Ansprüche, **dadurch gekennzeichnet, dass** die Legierung eine eutektische Wismut-Zinn Legierung ist.

6. Kopfplatte nach einem oder mehreren der vorangehenden Ansprüche, **dadurch gekennzeichnet, dass** ein Rohr (2) des Rohrbündels (1) aus einem Polymer ist.

7. Kopfplatte nach einem oder mehreren der vorangehenden Ansprüche, **dadurch gekennzeichnet, dass** eine Membran eine Polymermembran ist.

8. Kopfplatte nach einem oder mehreren der vorangehenden Ansprüche 1 bis 5, **dadurch gekennzeichnet, dass** ein Rohr aus einer Keramik und/oder einem Metall ist.

9. Kopfplatte nach einem oder mehreren der vorangehenden Ansprüche 1 bis 6 und 8, **dadurch gekennzeichnet, dass** eine Membran eine Zeolithmembran ist.

10. Kopfplatte nach einem oder mehreren der vorangehenden Ansprüche, **dadurch gekennzeichnet, dass** die Rohre (2) des Rohrbündels (1) chaotisch und sich berührend gebündelt sind.

11. Kopfplatte nach einem oder mehreren der vorangehenden Ansprüche 1 bis 9, **dadurch gekennzeichnet, dass** die Rohre des Rohrbündels an einem vorgebbaren Raster beabstandet ausgerichtet sind.

12. Kopfplatte nach einem oder mehreren der vorangehenden Ansprüche, **dadurch gekennzeichnet, dass** die axiale Länge eines Vergusses (5) länger bemessen ist als der Durchmesser einer Hüllkurve (3) des Rohrbündels (1).

## Claims

1. Head plate which grips the ends of a tube bundle having a plurality of tubes, which are more particularly porous and comprise a membrane, and seals said tube bundle, **characterised in that** the head plate (4) consists of a metal or a metallic alloy having a lower melting point than the lowest failure temperature of a tube material and/or of the membrane, the melting point being between 100 °C and 250 °C.

2. Head plate according to one or more the preceding claims, **characterised in that** the metal is bismuth (bismuth; Bi) or the alloy comprises bismuth.

3. Head plate according to one or more of the preceding claims, **characterised in that** the alloy is a bismuth alloy.

4. Head plate according to one or more of the preceding claims, **characterised in that** the metal or the alloy is free of lead.

5. Head plate according to one or more of the preceding claims, **characterised in that** the alloy is a eutectic bismuth-tin alloy.

6. Head plate according to one or more of the preceding claims, **characterised in that** one tube (2) in the tube bundle (1) is made of a polymer.

7. Head plate according to one or more of the preceding claims, **characterised in that** one membrane is a polymer membrane.

8. Head plate according to one or more of the preceding claims, **characterised in that** one tube is made of a ceramic and/or a metal.

9. Head plate according to one or more of the preceding claims 1 to 6 and 8, **characterised in that** one membrane is a zeolite membrane.

10. Head plate according to one or more of the preceding claims, **characterised in that** the tubes (2) in the tube bundle (1) are bundled chaotically and so as to be in contact with one another.

11. Head plate according to one or more of the preceding claims 1 to 9, **characterised in that** the tubes in the tube bundle are aligned with spacing on a predefinable grid.

12. Head plate according to one or more of the preceding claims, **characterised in that** the axial length of a casting (5) is longer than the diameter of an envelope (3) of the tube bundle (1).

## Revendications

1. Plaque de tête, terminant de façon étanche et entourant l'extrémité d'un faisceau de tubes avec une pluralité de tubes en particulier poreux, présentant une membrane, **caractérisée en ce que** la plaque de tête (4) consiste en un métal ou un alliage métallique dont la température de fusion est plus faible que la température de défaillance la plus faible d'un matériau des tubes et/ou de la membrane, la température de fusion étant comprise entre 100°C et 250°C.

2. Plaque de tête selon une ou plusieurs des revendications précédentes, **caractérisée en ce que** le métal est du bismuth (Bi) ou **en ce que** l'alliage contient du bismuth.

3. Plaque de tête selon une ou plusieurs des revendications précédentes, **caractérisée en ce que** l'alliage est un alliage de bismuth.

4. Plaque de tête selon une ou plusieurs des revendications précédentes, **caractérisée en ce que** le métal ou l'alliage est exempt de plomb.

5. Plaque de tête selon une ou plusieurs des revendications précédentes, **caractérisée en ce que** l'alliage est un alliage eutectique bismuth-étain.

6. Plaque de tête selon une ou plusieurs des revendications précédentes, **caractérisée en ce qu'**un tube (2) du faisceau de tubes (1) est en un polymère.

7. Plaque de tête selon une ou plusieurs des revendications précédentes, **caractérisée en ce qu'**une membrane est une membrane en polymère.

8. Plaque de tête selon une ou plusieurs des revendications précédentes 1 à 5, **caractérisée en ce qu'**un tube est en une céramique et/ou en un métal.

9. Plaque de tête selon une ou plusieurs des revendications précédentes 1 à 6 et 8, **caractérisée en ce qu'**une membrane est une membrane en zéolithe.

10. Plaque de tête selon une ou plusieurs des revendications précédentes, **caractérisée en ce que** les tubes (2) du faisceau de tubes (1) sont mis en faisceau de façon chaotique et en contact les uns avec les autres.

11. Plaque de tête selon une ou plusieurs des revendications précédentes 1 à 9, **caractérisée en ce que** les tubes du faisceau de tubes sont disposés de façon espacée selon une trame pouvant être prédéfinie.

12. Plaque de tête selon une ou plusieurs des revendications précédentes, **caractérisée en ce que** la longueur axiale d'un enrobage (5) est dimensionnée de façon à être plus grande que le diamètre d'une enveloppe (3) du faisceau de tubes (1).
